# EUROPÄISCHE PATENTSCHRIFT

(11) **EP 1 704 260 B1**
(45) Veröffentlichungstag und Bekanntmachung des Hinweises auf die Patenterteilung: **07.05.2008**
(21) Anmeldenummer: 04803917.6
(22) Anmeldetag: 15.12.2004
(51) Int. Cl.: C21D 7/06, C21D 7/04, C21D 7/08, F01D 5/28, C21D 10/00

(54) **BAUTEIL MIT DRUCKEIGENSPANNUNGEN, VERFAHREN ZUR HERSTELLUNG UND VORRICHTUNG ZUR ERZEUGUNG VON DRUCKEIGENSPANNUNGEN**
COMPONENT WITH INTERNAL COMPRESSIVE STRESS, METHOD FOR PRODUCING SAID COMPONENT AND DEVICE FOR GENERATING INTERNAL COMPRESSIVE STRESS
ELEMENT A CONTRAINTES DE PRESSION INTERNES, PROCEDE ET DISPOSITIF POUR GENERER DES CONTRAINTES DE PRESSION INTERNES

(30) Priorität: 15.01.2004 EP 04000775
(43) Veröffentlichungstag der Anmeldung: 27.09.2006
(60) Teilanmeldung: 07024980.0
(73) Patentinhaber: Siemens Aktiengesellschaft, 80333 München (DE)
(72) Erfinder: DAVID, Walter, 45481 Mülheim (DE)
(86) Internationale Anmeldenummer: PCT/EP2004/014300
(87) Internationale Veröffentlichungsnummer: WO 2005/068666

(56) Entgegenhaltungen:
- EP-A- 0 230 165
- EP-A- 1 174 217
- DE-C1- 4 015 205
- US-A- 4 428 213
- US-A- 4 937 421
- US-A- 5 492 447
- US-B1- 6 267 558
- US-B1- 6 622 570
- LAMPMAN S.R., REIDENBACH F.: "ASM HANDBOOK, VOL.5, SURFACE ENGINEERING" 1994, ASM INTERNATIONAL , USA , XP002327369 Seiten 126-135

## Beschreibung

Die Erfindung betrifft ein Bauteil mit Druckeigenspannungen gemäß des Oberbegriffs des Anspruch 1 und ein Verfahren zur Herstellung eines Bauteils mit Druckeigenspannungen gemäß Anspruch 7.

In mechanisch hoch beanspruchten Bauteilen werden oft Druckeigenspannungen eingebracht, damit die Bauteile erhöhte Spannungen ertragen können. Teilweise wird dies bei den tannenbaumähnlich ausgeformten Füßen von Schaufeln von Turbinen (Dampfturbinen, Gasturbinen) durchgeführt.

Druckeigenspannungen können durch Rollieren eingebracht werden.
Eine andere Möglichkeit zur Erzeugung von Druckeigenspannungen stellt das Kugeldruckstrahlen dar.
Die US-PS 5,911,780 zeigt eine solche Methode zur Erzeugung von Druckeigenspannungen.

Die US-PS 5,492,447 offenbart ein Verfahren zum Erzeugen von Druckeigenspannungen in Rotorkomponenten mittels eines Lasers.

Ein ähnliches Verfahren ist in der EP 731 184 B1 offenbart.

Die WO 01/15866 A1 zeigt ein Verfahren zur Oberflächenbehandlung eines Bauteils, bei dem zumindest ein Strahlparameter bei einem abrasiven Strahlungsverfahren an die Konturlinie des Bauteils angepasst wird.

Die DE 197 42 137 A1 zeigt eine Walzvorrichtung zur Erzeugung von Druckeigenspannungen.

Die US 4,428,213 offenbart ein Bauteil, bei dem ein erster Bereich und anschließend das gesamte Bauteil mit einer geringeren Intensität kugelgestrahlt werden.

Die EP 0 230 165 A1 und die EP 1 125 695 A2 offenbaren einen Roboter, der ein Werkzeug gegenüber einem zu bearbeitenden Bauteil führt.

Die US 4,937,421 offenbart eine Laserbestrahlungsmethode und eine dazugehörige Vorrichtung, wobei der Laserstrahl eines Lasers in zwei Strahlen aufgeteilt wird, um so eine größere Bestrahlungsfläche auf den zu bearbeitenden Bauteil zu erzeugen, damit eine schnellere Bearbeitungszeit erzielt wird. Diese zwei Laserstrahlen werden gemeinsam geführt und weisen bezüglich Auftreffwinkel, Intensität die gleichen Parameter auf und werden in einer Halterung gemeinsam geführt.

Bauteile nach dem Stand der Technik zeigen für die gewünschten Anforderungen an die lokal unterschiedlichen Betriebsspannungen keine ausreichende Festigkeit für außergewöhnliche Betriebszustände.

Es ist daher Aufgabe der Erfindung, dieses Problem zu überwinden.

Die Aufgabe wird gelöst durch ein Bauteil gemäß des Anspruchs 1 und durch ein Verfahren gemäß Anspruch 7.

In den Unteransprüchen sind weitere vorteilhafte Maßnahmen aufgelistet.
Die in den Unteransprüchen aufgelisteten Maßnahmen können in vorteilhafter Art und Weise miteinander kombiniert werden.

Es zeigen
- Figur 1, 2: ein Bauteil, das eine gekrümmte Oberfläche aufweist,
- Figur 3: eine schematische Anordnung einer Vorrichtung, mit der das erfindungsgemäße Verfahren durchzuführen ist,
- Figur 4, 18, 19: den lateralen Verlauf (schematisch) der Druckeigenspannungen,
- Figuren 5 bis 13, 20, 21: verschiedene Verfahrensabläufe des Verfahrens,
- Figur 15: eine Turbinenschaufel,

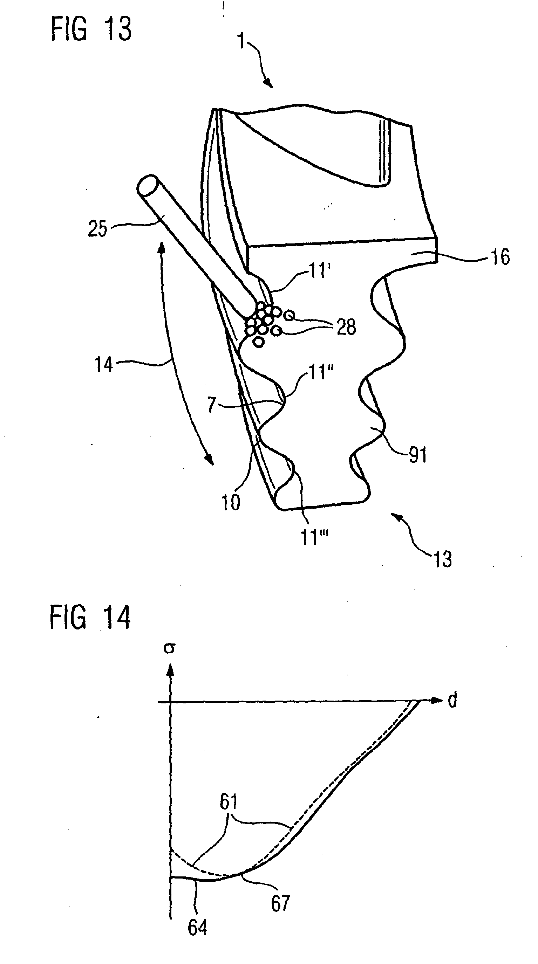

- Figur 14: einen Druckspannungsverlauf aufgetragen über der Tiefe eines Bauteils

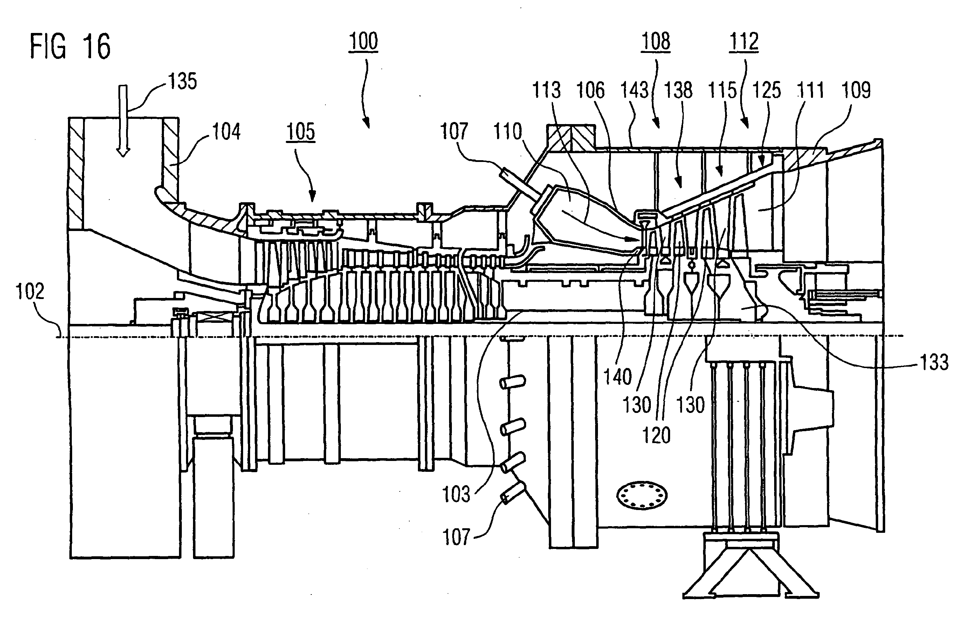

- Figur 16: eine Gasturbine,

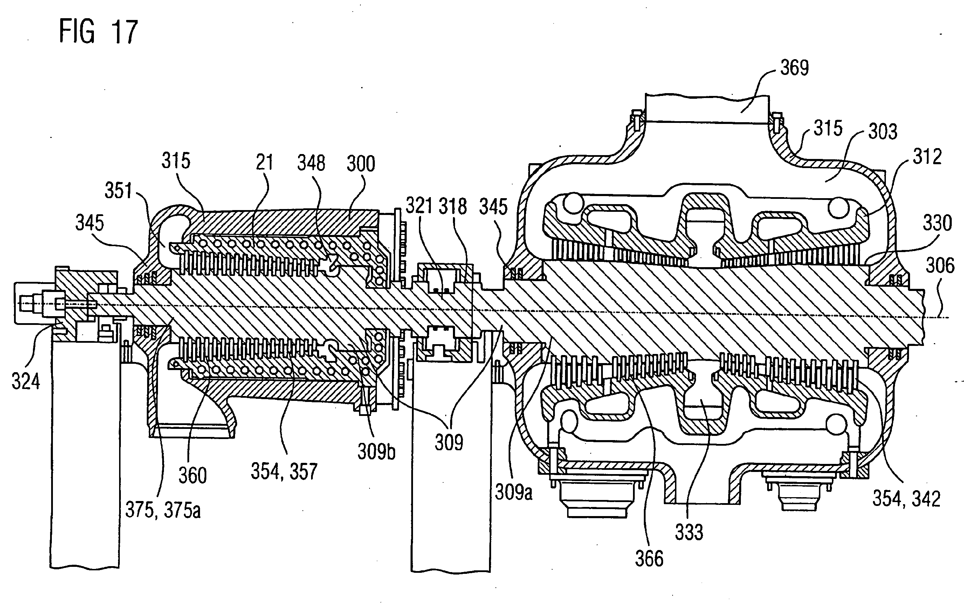

- Figur 17: eine Dampfturbine.

### Das Bauteil

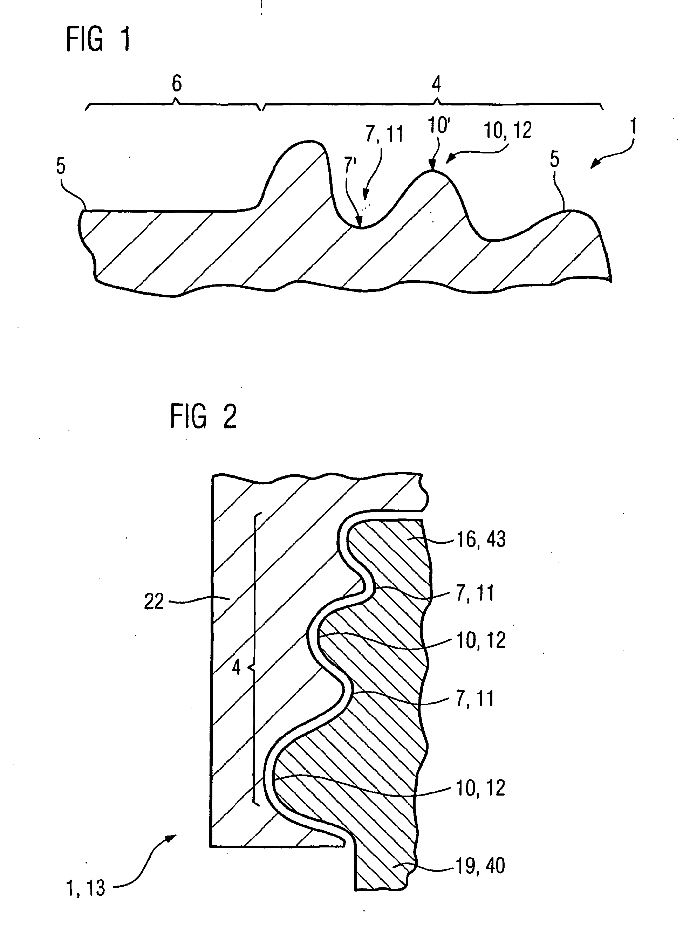

Figur 1 zeigt ein Bauteil 1 mit einer Oberfläche 5 gemäß Anspruch 1. Das Bauteil 1 kann ein Bauteil einer Dampfturbine (Fig. 17) oder einer Gasturbine sein, wie z.B. eine Flugzeugturbine oder eine Turbine zur Stromerzeugung 100 (Fig. 16).
Solche Bauteile sind beispielsweise Turbinenschaufeln 120, 130, 342, 354.

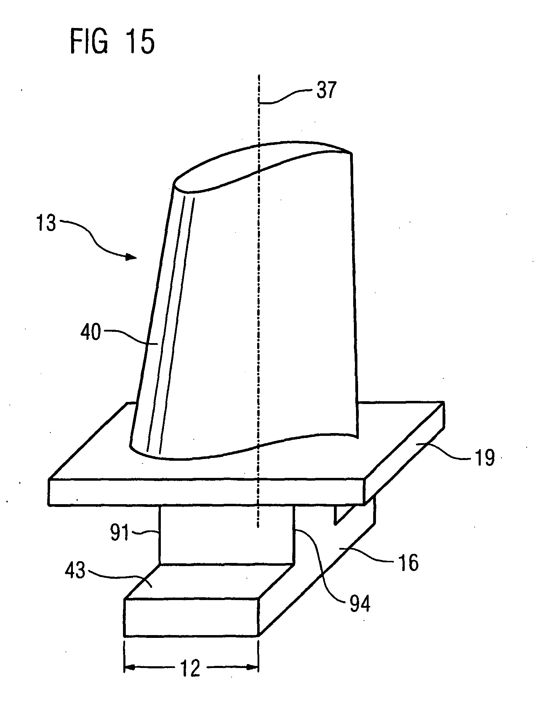

Die Oberfläche 5 des Bauteils 1, 120, 130, 342, 354 setzt sich beispielsweise aus mehreren, hier zwei Oberflächenbereichen 4, 6 zusammen.
Ein Oberflächenbereich 6 (beispielsweise Schaufelblattbereich 40, Fig. 15) ist beispielsweise eben oder nur einfach gekrümmt ausgeführt, wohingegen der Oberflächenbereich 4 mehrfach gekrümmt ist.
In der Oberfläche 5 und seinen Oberflächenbereichen 4 und/oder 6 sind unterschiedliche und von Null verschiedene Druckeigenspannungen σ_{E} vorhanden.
Das Bauteil 1, 120, 130, 342, 354 weist einen konkav gekrümmten Bereich 7 des Oberflächenbereichs 4 auf, der beispielsweise während des Einsatzes des Bauteils 1, 120, 130, 342, 354 höheren mechanischen Spannungen ausgesetzt ist als ein anderer, konvex gekrümmter Bereich 10 des Oberflächenbereichs 4.

Der Oberflächenbereich 4 des Bauteils 1, 120, 130, 342, 354 weist zumindest teilweise konkav 7 (ein Tal 11) und konvex 10 gekrümmte Bereiche (Bergkuppe 12) auf, so dass es lokale Maxima 10' und lokale Minima 7' gibt. Ein konvex gekrümmter Bereich 10, 12 schließt sich an den konkav gekrümmten Bereich 7, 11 an.

In dem konkav gekrümmten Bereich 7, 11 liegt beispielsweise eine äußere höhere mechanische Spannung an als in dem konvex gekrümmten Bereich 10, 12, wenn das Bauteil 1, 120, 130, 342, 354 eingebaut ist.

In dem Oberflächenbereich 4 können durch Oberflächenbehandlungsverfahren Druckeigenspannungen σ_{E} eingebracht werden. Dies geschieht durch Kugelbestrahlung.

Figur 2 zeigt : als eingebautes Bauteil 1 einen Teilbereich einer Turbinenschaufel 13 (Fig. 15), nämlich einen Schaufelfuß 43 (Fig. 15) in seinem Befestigungsbereich 16 (Fig. 15) mit seiner tannenbaumähnlichen oder schwalbenschwanzartigen Struktur als mehrfach gekrümmter Oberflächenbereich 4.

Der Schaufelfuß 43 ist beispielsweise in einer entsprechend ausgeformten Scheibe 22 angeordnet und wird dort gehalten. Die Scheibe 22 ist wiederum auf einer Welle 103 einer Gasturbine 100 (Fig. 16) oder Dampfturbine (Fig. 17) angeordnet. Insbesondere in dem konkav gekrümmten Bereich 7, 11 treten hohe mechanische Belastungen auf.
Daher besteht der Bedarf, das Bauteil 1 in diesen Bereichen lokal so zu beeinflussen, dass höhere Zugspannungen ertragen werden können indem die örtlichen Zugspannungen teilweise kompensiert werden. Dies muss jedoch kontrolliert und in Abhängigkeit von der Geometrie gezielt mit örtlich unterschiedlichen Druckeigenspannungen σ_{E} erfolgen. Die Turbinenschaufel 13 kann auch an der Welle 103 befestigt sein.

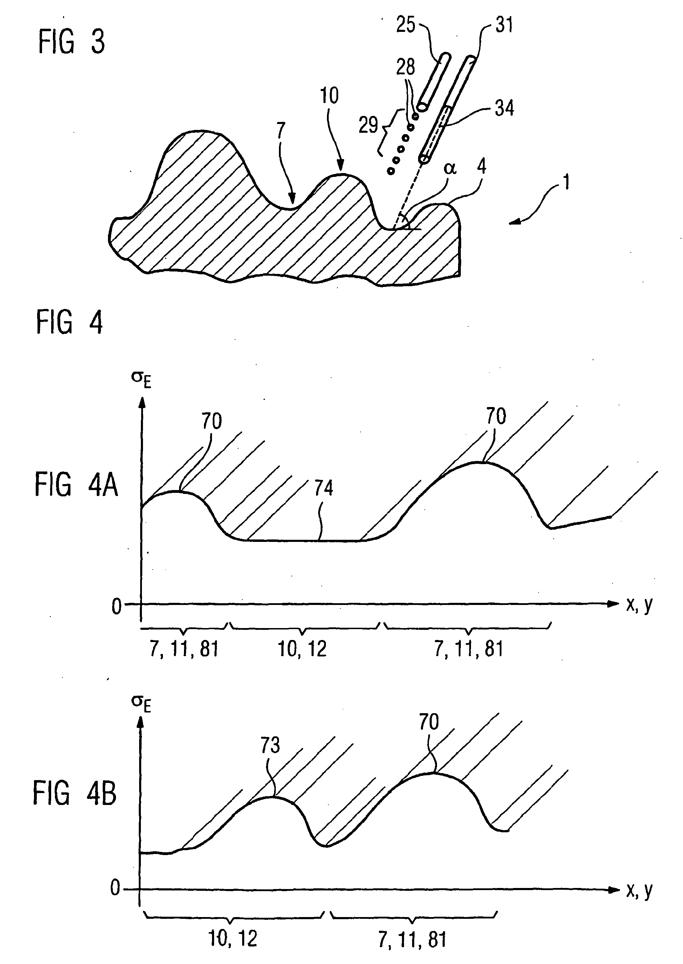

Figur 3 zeigt schematisch wie ein Druckerzeuger 25 und Bauteil 1, 120, 130, 342, 354 gegeneinander verfahren werden. Erfindungsgemäß werden Druckeigenspannungen σ_{E} in dem Bauteil 1, 120, 130, 342, 354 ausgehend von dem Oberflächenbereich 4 bis in die Tiefe des Bauteils 1, 120, 130, 342, 354 hinein erzeugt.
Dies erfolgt durch Kugelbestrahlung.

Eine Kugelstrahldüse 25 als Druckerzeuger strahlt Strahlmittel 28 (Kugel) mit einer gewissen Geschwindigkeit aus, die einen Teilchenstrahl 29, insbesondere einen Kugelstrahl 29, bilden. Die Kugeln 28, insbesondere Stahlkugeln, treffen auf den Oberflächenbereich 4 des Bauteils 1 auf und generieren durch ihren mechanischen Impuls einen Strahldruck auf dem Oberflächenbereich 4, so dass dort Druckeigenspannungen σ_{E} erzeugt werden.
Die Kugelstrahldüse 25 kann über Laserstrahlen 34 eines Lasers 31 so gesteuert werden, dass sie exakt im vordefinierten Bereich auch entlang von gekrümmten Konturen geführt wird.
Insbesondere der Abstand, der Auftreffwinkel α, d.h. der Winkel der Kugelstrahldüse 25 zu der Oberfläche 5 in dem Oberflächenbereich 4, 6 kann angepasst werden. Der Auftreffwinkel α ist beispielsweise kleiner als 90° und liegt insbesondere zwischen 80° und 85°.

Ebenso kann der Strahldruck des Kugelstrahls 29 bei der Kugelstrahldüse 25 eingestellt werden.
Weitere Parameter sind die Größe des Strahlmittels 28, das Material des Strahlmittels 28 oder die Form der Düsenöffnung.

Das Bauteil 1 ist beispielsweise fest eingespannt, wobei beispielsweise in einem ersten Verfahrensschritt der Laser 31 mit seinen Laserstrahlen 34 den Oberflächenbereich 4 des Bauteils 1 CNC gesteuert abtastet. Dabei wird entweder das Bauteil 1 auf einer CNC-Maschine montiert und gegenüber dem Laser 31 verfahren oder umgekehrt.
Durch das Abfahren des Oberflächenbereichs 4 des Bauteils 1 wird die exakte Geometrie des Bauteils 1 erfasst. Durch Vorgabe von bestimmten Bereichen (beispielsweise die konkav gekrümmten Bereiche 7) werden Bereiche festgelegt, die mit der Kugelstrahldüse 25 behandelt werden. Ebenso kann nach dem Erfassen des Oberflächenbereichs 4 beispielsweise automatisch eine Berechnung erfolgen, die festlegt, welche Bereiche besonders hohen mechanischen Belastungen ausgesetzt sind und dann dementsprechend die Ausdehnung und Höhe der Druckeigenspannungen σ_{E} festlegt werden, die mittels Kugelstrahlen 29 erzeugt werden sollen.

Durch die Höhe der Druckeinspannungen σ_{E}, die erzeugt werden soll, werden auch die Parameter der Kugelstrahldüse 25 bezogen auf die zu bestrahlenden konkaven oder konvexen Bereiche 7, 10 festgelegt.
Es handelt sich dabei also um eine Methode, bei der der gesamte Oberflächenbereich 4 in einem Prozess lokal gezielt mit unterschiedlichen Parametern behandelt wird, so dass nach Durchführung des Verfahrens auf der gesamten Oberfläche lokal vordefinierte, jedoch unterschiedliche Druckeigenspannungen σ_{E} vorliegen.
Der gesamte Oberflächenbereich 4, auf der Druckeigenspannungen σ_{E} vorhanden sind, entspricht der Oberfläche eines tannenbaumähnlichen Schaufelfußes 43 der Turbinenschaufel 13, 120, 130, 342, 354.
Lokal unterschiedlich bedeutet in diesem Fall, dass Bereiche erzeugt werden, die hohe und niedrigere und von null verschiedene Druckeigenspannungen σ_{E} nach dem Durchführen des Verfahrens aufweisen.

So werden e in den konkav gekrümmten Bereichen 7, 11 hohe Druckeigenspannungen σ_{E} erzeugt, wohingegen in den übrigen konvex gekrümmten Bereichen 10, 12 geringere Druckeigenspannungen σ_{E} erzeugt werden. Es bleibt keine gekrümmte Fläche 7, 10 unbehandelt, so dass zumindest ein konvex gekrümmter Bereich 10 und ein konkav gekrümmter Bereich 7 in ihrem gesamten Oberflächenbereich Druckeigenspannungen σ_{E} aufweisen.
Die Steuerung des Kugelstrahles 29 erfolgt durch den Laser 31 und beispielsweise durch eine CNC-Maschine, die den Kugelstrahl 29 gegenüber dem Bauteil 1 bewegt, um verschiedene Bereiche 7, 10 bestrahlen zu lassen.

Figur 4 a) zeigt eine beispielhafte Verteilung der Druckeigenspannungen σ_{E} in einer x-y-Ebene.
In dem konkav gekrümmten Bereich 7, 11, der die höheren Druckeigenspannungen σ_{E} aufweist, ist ein Maximum 70 in der Druckeigenspannung σ_{E} innerhalb der x-y-Ebene vorhanden.
Der konvex gekrümmte Bereich 10, 12 weist ein Plateau 74 niedrigerer Druckeigenspannungen σ_{E} auf.
Jedoch ist das Maximum 70 und alle Werte des Bereichs 7, 11 höher als der Wert des Plateaus 74.
Lokal unterschiedliche Druckeigenspannungen bedeutet daher, dass die Druckeigenspannungen σ_{E} in dem konkav gekrümmten Bereich 7, 11 höher sind als in dem Plateau 74 in dem konvex gekrümmten Bereich 10, 12 mit den niedrigeren Druckeigenspannungen σ_{E}.

Figur 4 b) zeigt eine weitere beispielhafte Verteilung der Druckeigenspannungen σ_{E} in einer x-y-Ebene.
In dem konkav gekrümmten Bereich 7, 11, der die höheren Druckeigenspannungen σ_{E} aufweist, ist ein Maximum 70 in der Druckeigenspannung σ_{E} innerhalb der x-y-Ebene vorhanden.
Der konvex gekrümmte Bereich 10, 12 weist ein Maximum 73 niedrigerer Druckeigenspannungen σ_{E} auf.
Jedoch ist das Maximum 70 höher als das Maximum 73.
Lokal unterschiedliche Druckeigenspannungen bedeutet daher, dass das Maximum 70 in der Druckeigenspannung σ_{E} in dem Bereich 7, 11 höher ist als das Maximum 73 in dem konvex gekrümmten Bereich 10, 12 mit den niedrigeren Druckeigenspannungen σ_{E}.
Zwar weist der konkav gekrümmte Bereich 7, 11, wie in Figur 4b) auch ersichtlich, stellenweise niedrigere Druckeigenspannungen σ_{E} auf als der konvex gekrümmte Bereich 10, 12, insbesondere in dem Übergangsbereich zwischen dem konkav gekrümmten Bereich 7, 10, jedoch bedeutet das, dass nicht ein punktueller Vergleich von Druckeigenspannungen σ_{E} herangezogen werden darf, um die Bereiche mit höheren Druckeigenspannungen σ_{E} und niedrigeren Druckeigenspannungen σ_{E} zu definieren, sondern die Höhe der Maxima 70, 73 zu Grunde zu legen ist.

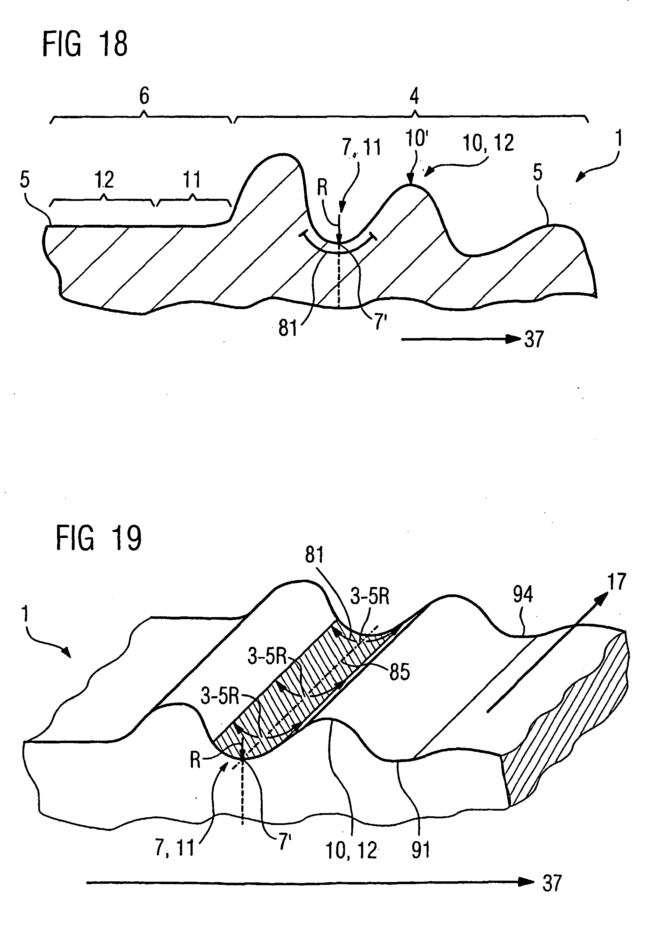

Figur 18 zeigt ein erfindungsgemäßes Bauteil 1.

Der konkav gekrümmte Bereich 7 weist ein Minimum 7' auf, das einen bestimmten Krümmungsradius R aufweist.
Der Krümmungsradius R wird im Punkt des Minimums 7' in bekannter Art und Weise bestimmt.
Eine Breite 81 des konkav gekrümmten Bereichs 7, 11, in dem die höheren Druckeigenspannungen σ_{E} vorhanden sind, beträgt mindestens das 3 - 5 fache des Krümmungsradius R und ist insbesondere mittig um das Minimum 7' angeordnet.
An den konkav gekrümmten Bereich 7, 11 mit der Breite 81 schließt sich in Richtung der Längsachse 37 zumindest ein konvex gekrümmter Bereich 10, 12 mit den niedrigeren Druckeigenspannungen σ_{E} an.

Die Druckeigenspannung σ_{E} in dem konkav gekrümmten Bereich 7, 11 mit der höheren Druckeigenspannungen σ_{E} ist zumindest 30%, oder 50%, oder 60% gegenüber den Druckeigenspannungen σ_{E} in dem konvex gekrümmten Bereich 10 mit einem niedrigeren Druckeigenspannungen σ_{E} erhöht.

Die Höhe der Druckeigenspannungen σ_{E} in dem konkav gekrümmten Bereich 7 kann auch mit einer Streckgrenze Rp des Materials des Bauteils 1, 120, 130, 342 ,354 korreliert werden.

Beispielsweise kann die Streckgrenze R_{p 0,2} verwendet werden, wobei beispielsweise die Druckeigenspannung σ_{E} mindestens 30%, der Streckgrenze R_{p 0,2} beträgt.

Die Bauteil 1 bzw. der Schaufelfuß 43 der Turbinenschaufel 13, 120, 130, 342, 354 erstreckt sich in einer Richtung 17 beispielsweise von einem Ende 91 zu dem anderen Ende 94 (Fig. 19) senkrecht zur Längsachse 37.
Der konkav gekrümmte Bereich 7, 11 ist eine gekrümmte Fläche mit der Breite 3 bis 5 mal R (=81), um eine Linie 85, die die Minima 7' in Richtung 17 miteinander verbindet. In Richtung 17 erstreckt sich der konkav gekrümmte Bereich 7, 11 über die Breite des Bauteils 1, 120, 130, also von dem Ende 91 zu dem Ende 94. Die Breite 81 ist die Länge des gekrümmten Konturverlaufs um das Minimum 7'.

### Verfahren nach dem Stand der Technik

Wird nach dem Stand der Technik nur eine einzige Kugelstrahldüse 25 verwendet, so können zuerst nur hohe Druckeigenspannungen σ_{E} und dann niedrige Druckeigenspannungen σ_{E} erzeugt werden oder umgekehrt.

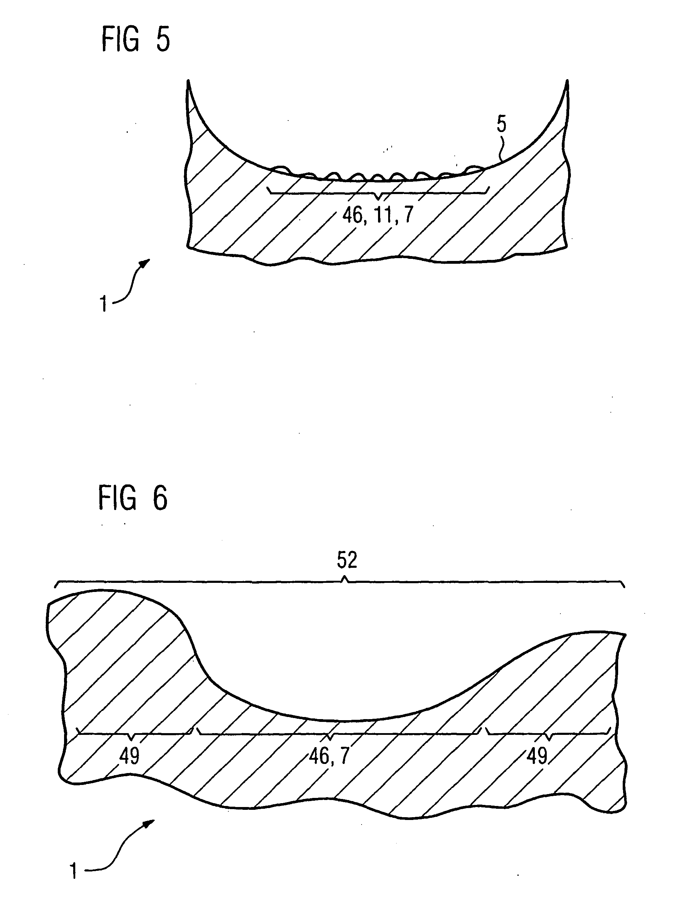

Figur 5 zeigt einen Teilbereich der Oberfläche 5 eines Bauteils 1, 13, 120, 130, 342, 354.

In einem ersten Verfahrensschritt erfolgt eine Kugelstrahlung eines konkav gekrümmten Bereichs 46 mit hohem Strahldruck. In einem weiteren Verfahrensschritt werden andere, benachbarte Bereich 49 behandelt, bei denen eine Kugelbestrahlung mit geringerem Strahldruck erfolgt (Fig. 6).

Das Verfahren kann angewendet werden bei neu hergestellten Bauteilen 1, 120, 130, 342, 354 sowie bei wieder aufgearbeiteten Bauteilen 1, 120, 130, 342, 354.

Wiederaufarbeitung bedeutet, dass Bauteile 1 nach ihrem Einsatz gegebenenfalls von Schichten befreit werden oder auf Risse untersucht werden, wobei die gegebenenfalls repariert werden. Druckeigenspannungen σ_{E} werden dann wieder neu erzeugt.

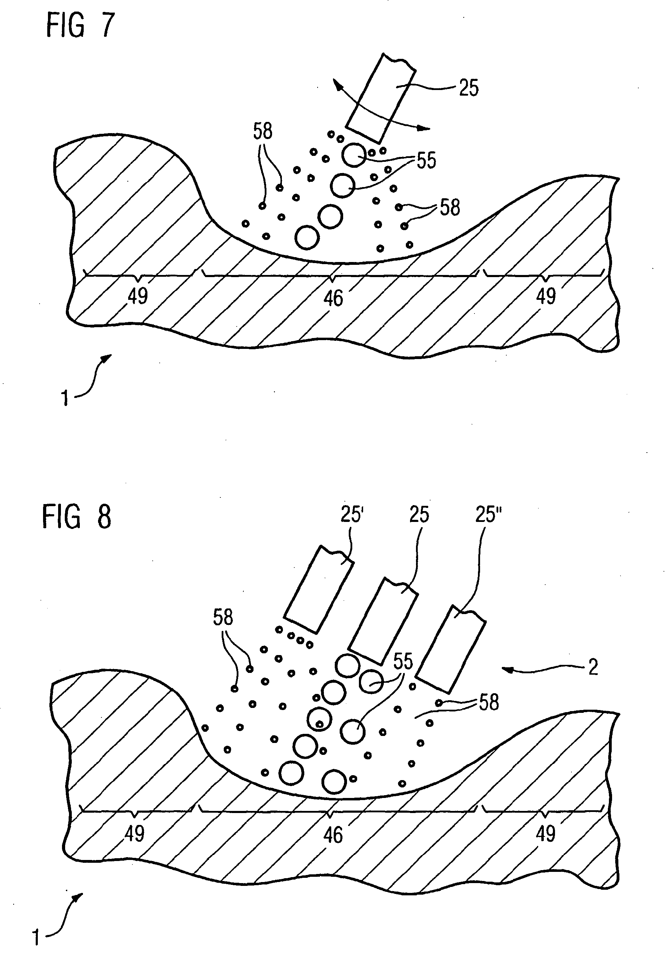

Figur 7 zeigt eine Vorrichtung nach dem Stand der Technik, mit der das Verfahren durchzuführen ist.

Bei dieser Vorrichtung wird nur eine Kugelstrahldüse 25 verwendet.

In einem ersten Schritt wird im Bereich 46 (konkav gekrümmter Bereich) ein hoher Strahldruck eingebracht.
Durch Bewegung (siehe Pfeil) der Kugelstrahldüse 25 oder des Bauteils 1, beispielsweise durch Variation des Auftreffwinkels, wird dann ein Kugelstrahl 29 auf die Bereiche 49 (konkav gekrümmter Bereich) gelenkt, in denen geringere Strahldrücke erzeugt werden sollen.
Dies kann dadurch erreicht werden, dass die Kugeln 28, die im Bereich 46 verwendet wurden, geringere Geschwindigkeiten und damit geringere mechanische Impulse erfahren oder dass die Kugelstrahldüse 25 Kugeln 28 kleineren Durchmessers 58 in die Bereiche 49 abstrahlt.

Wenn die Kugeln 28 einen kleinen Durchmesser aufweisen, so können verschiedene Strahldrücke erzeugt werden, indem beispielsweise die Materialien der Kugeln verschieden hart sind. So kann für hartes Material beispielsweise keramisches Material und als weiches Material metallisches Material verwendet werden.

Große Kugeln 55 erzeugen bei gleicher Geschwindigkeit gegenüber kleineren Kugeln 58 einen größeren Strahldruck.

Ebenso ist es möglich, kleine keramische Kugeln und große metallische Kugeln zu verwenden.
Weitere Kombinationsmöglichkeiten von verschiedenen Materialien, Durchmessern und Form der Kugeln sind denkbar, beispielsweise um eine abrasive Wirkung oder Verminderung der Rauhigkeit bzw. Glättung zu erzielen.

### Erfindungsgemäßes Verfahren

Erfindungsgemäß werden mehrere Kugelstrahldüsen 25, 25', 25", 25"', 25"" verwendet und, diese werden gepaart und gleichzeitig betrieben.

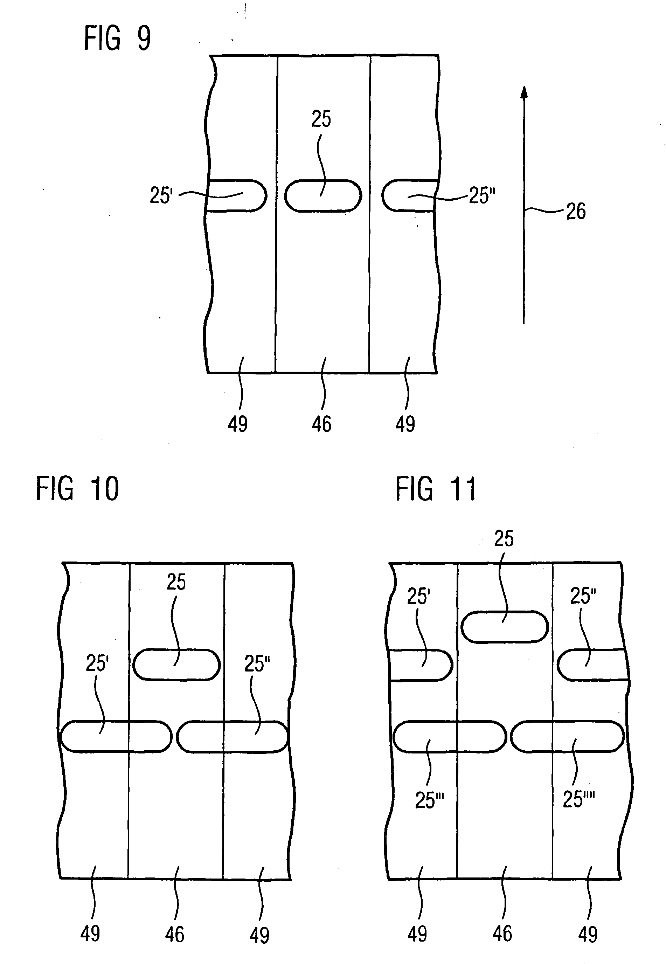

Die Kugelstrahldüsen 25, 25', 25", 25"', 25'"' sind örtlich auf gleicher Höhe (Fig. 9) oder gegeneinander versetzt, d.h. eine oder mehrere Kugelstrahldüsen sind vorlaufend und die andere oder anderen nachlaufend (Fig. 10, 11).

Figur 8 zeigt eine Vorrichtung 2 mit der das erfindungsgemäße Verfahren durchzuführen ist.
Bei dieser Vorrichtung 2 werden beispielsweise mehrere, zumindest zwei, hier drei Kugelstrahldüsen 25, 25', 25" verwendet.

Ebenso werden die in Figur 8 gezeigten drei Kugelstrahldüsen 25, 25', 25" gleichzeitig betrieben (zur Druckeigenspannungserzeugung und Glättung).

Dabei können eine oder zwei Kugelstrahldüsen 25', 25", die beispielsweise geringere Strahldrücke erzeugen, ebenfalls in den Bereich 46 (bestrahlen also einen Bereich 52, Fig. 6) hineinstrahlen (Fig. 10, 11).

Dabei erzeugt eine Kugelstrahldüse 25 einen hohen Strahldruck und bestrahlt den konkav gekrümmten Bereich 46 und die zweite oder weitere Kugelstrahldüse 25', 25" erzeugt einen geringeren Strahldruck als die Kugelstrahldüse 25 auf und bestrahlen zumindest den konvex gekrümmten Bereich 49.

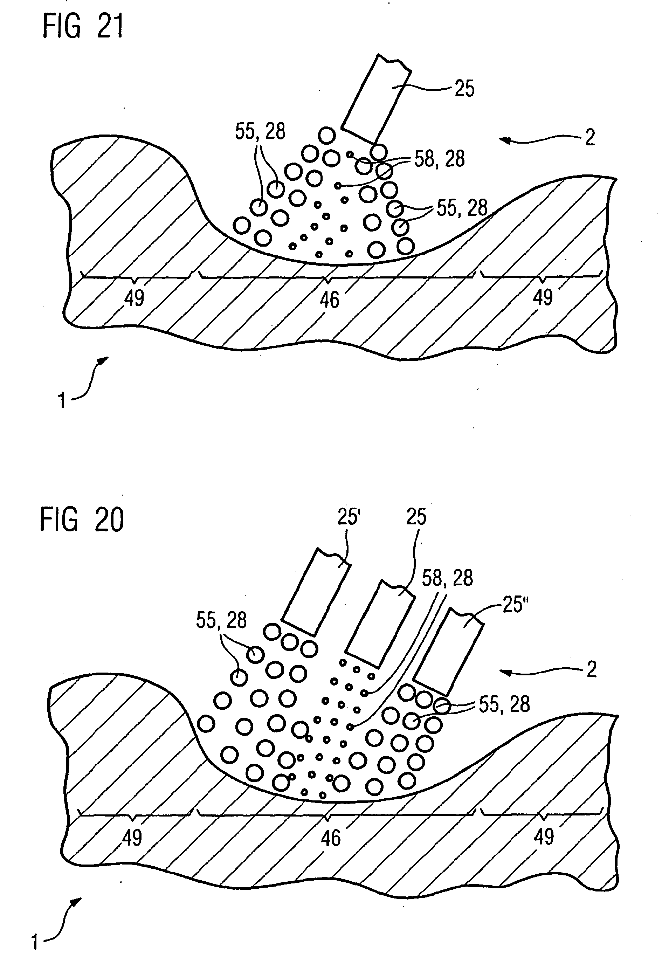

Ebenso kann die Kugelstrahldüse 25 Kugeln 28 kleineren Durchmessers 58 aufweisen, um hohe Intensitäten und hohe Druckeigenspannungen zu erzeugen, und die Kugelstrahldüsen 25' , 25" strahlen mit Kugeln 28 größeren Durchmessers 55, die in den Bereichen 49 geringe Intensitäten und geringere Druckeigenspannungen erzeugen und gleichzeitig in den Bereich 46 hinein, um diesen zu glätten (Fig. 20).
Die Auswahl der Parameter kann den jeweiligen Anforderungen an Höhe der Druckeigenspannungen und Glättung angepasst werden.

Für die Kugelstrahldüsen 25, 25', 25", die gleichzeitig betrieben werden, können für jede Kugelstrahldüse 25, 25', 25" verschiedene Parameter eingestellt werden.

Als Parameter für die Kugelstrahldüse 25, 25', 25" kann der Strahldruck, die Größe des Strahlmittels 28, das Material des Strahlmittels 28 oder der Auftreffwinkel α ausgewählt werden.

Die Kugelstrahldüse 25 und die Kugelstrahldüsen 25', 25" weisen verschiedene Parameter auf.

Die Kugelstrahldüsen 25, 25', 25" können nebeneinander, d.h. wie in Figur 9 angedeutet, auf einer Höhe vorhanden oder hintereinander angeordnet sein (Fig. 10, 11).

Die verschiedenen Parameter für die Kugelstrahldüsen 25, 25', 25" werden vorgegeben und die Bereiche 46, 49 werden beispielsweise in einem Arbeitsgang überfahren. Das sieht beispielsweise so aus, dass die Kugelstrahldüsen 25, 25', 25" beispielsweise eine feste Position haben und das Bauteil 1 auf einer beweglichen Unterlage (CNC-Maschine) montiert ist und unter den Kugelstrahldüsen 25, 25', 25" bewegt wird. Das Bauteil 1 kann auch hin und her bewegt werden, so dass die Bereiche 46, 49 mehrfach bestrahlt werden. Durch diese Vorgehensweise müssen die Bereiche 7, 10, in denen unterschiedliche Druckeigenspannungen erzeugt werden sollen, nicht nacheinander mit Kugelstrahlen beaufschlagt werden. Dies führt zu einem erheblichen Zeitvorteil.
Der Bereich auf der Oberfläche 5 des Bauteils 1, der von einer Kugelstrahldüsen 25, 25', 25' bestrahlt, kann rund oder oval sein, wobei die einzelnen Bereiche aneinander angrenzen.

Figur 9 zeigt eine Aufsicht auf die Bereiche 46 und 49 und die dazu beispielhaft verwendete Anordnung der Kugelstrahldüsen 25, 25' und 25".
Die Kugelstrahldüsen 25, 25', 25" sind hier auf gleicher Höhe angeordnet.

Die Kugelstrahldüsen 25, 25', 25" werden in einer Verfahrrichtung 26 über die Bereiche 46 und 49 verfahren. Dies erfolgt in einem Arbeitsschritt, in dem alle drei Düsen 25, 25' und 25" gleichzeitig betrieben werden, wobei dem Bereich 46 eine höhere Druckeigenspannung σ_{E} durch die Kugelstrahldüse 25 und niedrige Druckeigenspannungen σ_{E} in den angrenzenden Bereichen 49 erzeugt werden.

Figur 10 zeigt eine weitere Möglichkeit Druckeigenspannungen σ_{E} in den Bereichen 46 und 49 zu erzeugen.

Die Öffnungen der Kugelstrahldüsen 25' und 25" sind hier beispielsweise länglich ausgebildet oder ergeben eine längliche Auftrefffläche auf dem Bauteil 1, 120, 130, 342, 354 und überdecken beispielsweise sowohl den Bereich 49 und den angrenzenden Bereich 46. Dieses ist beispielsweise dann gewollt, wenn dadurch eine Glättung des Bereichs 46 erfolgen soll. Die Kugelstrahldüsen 25' und 25" sind daher in Verfahrrichtung örtlich gesehen gegenüber der Kugelstrahldüse 25 versetzt. Die Kugelstrahldüse 25 ist beispielsweise vorlaufend und die Kugelstrahldüsen 25' und 25" nachlaufend. Auch hier können die Kugelstrahldüsen 25, 25' und 25" zeitlich gesehen zusammen oder nacheinander betrieben werden.

So kann die Düse 25 zur Erzeugung von Druckeigenspannungen σ_{E} und die Düsen 25', 25" zur Glättung verwendet werden.

Dabei sind die Kugelstrahldüsen beispielsweise auf einen Träger gemeinsam montiert und werden gemeinsam verfahren.

Figur 11 zeigt eine weitere Anordnung von Kugelstrahldüsen. Hier werden fünf Kugelstrahldüsen 25, 25', 25", 25"' und 25"" verwendet.
Die Parameter für die einzelnen Kugelstrahldüsen 25 und 25', 25" sowie 25"' und 25"" können jeweils unterschiedlich sein und den gewünschten Anforderungen angepasst sein.

So können beispielsweise die Düsen 25, 25', 25" zur Erzeugung von Druckeigenspannungen σ_{E} und beispielsweise die Düsen 25"', 25"" zur Glättung verwendet werden.

Die Kugelstrahldüse 25 deckt den Bereich 46 ab, wohingegen die Kugelstrahldüsen 25', 25" nur die jeweils angrenzenden Bereiche 49 abdecken.

Die örtlich gesehen nachfolgenden Kugelstrahldüsen 25"', 25"" dienen zur Glättung und decken hier beispielsweise sowohl den Bereich 46 als auch den Bereich 49 ab.
Dabei sind die Kugelstrahldüsen auf einen Träger gemeinsam montiert und werden gemeinsam verfahren.

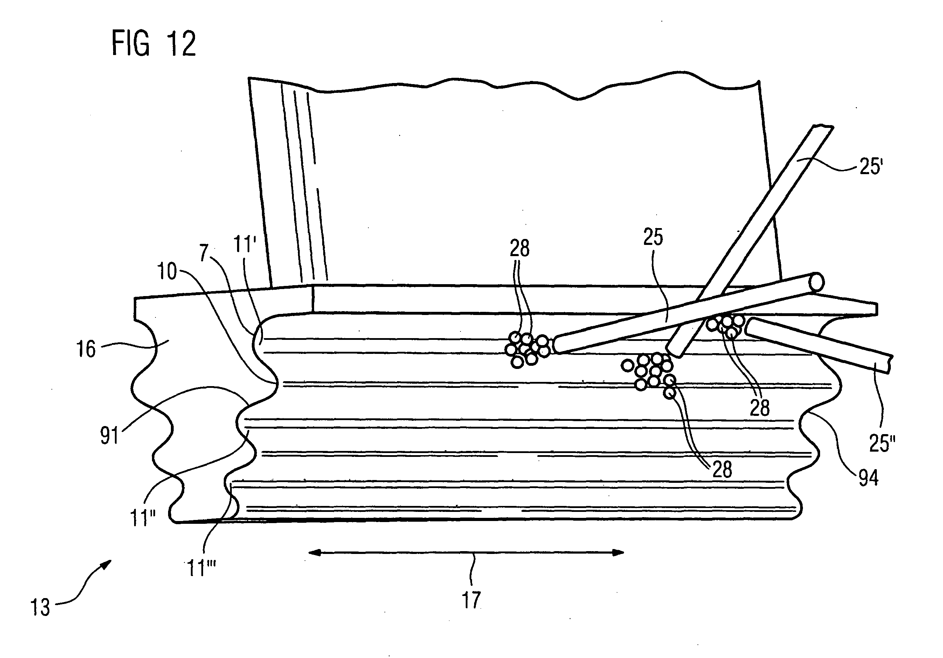

Figur 12 zeigt als Bauteil 1 eine Turbinenschaufel 13 mit ihrem im Befestigungsbereich 16 tannenbaumähnlich ausgebildeten Schaufelfuß 43.
Der Schaufelfuß 43 weist konkav gekrümmte Bereiche 7 auf, in denen hohe Druckeigenspannungen σ_{E} vorhanden sein sollen und weist konvex gekrümmte Bereiche 10 auf, in denen geringere Druckeigenspannungen σ_{E} als im konvex gekrümmten Bereich 7 vorhanden sein sollen.

Der Schaufelfuß 43 weist beispielsweise drei Wellentäler bzw. Rillen 11', 11", 11"' auf, wobei die drei Kugelstrahldüsen 25, 25', 25" beispielsweise bezüglich ihrer Parameter fest gegenüber der ersten Rille 11' eingestellt sind.
Die Turbinenschaufel 13 oder das Bauteil 1 wird entlang einer Richtung 17 gegenüber den Kugelstrahldüsen 25, 25' und 25" verschoben, so dass die gesamte Rille 11' bestrahlt wird. Dieser Vorgang kann für die weiteren Rillen 11" und 11"' wiederholt werden, oder es sind entsprechend für die Rillen 11" und 11"' weitere Kugelstrahldüsen vorhanden, die eine gleichzeitige Bearbeitung aller Rillen ermöglichen.

Figur 13 zeigt schematisch, dass die Kanten der Rillen 11', 11", 11"' ebenfalls bestrahlt werden, um Druckeigenspannungen σ_{E} zu erzeugen.
Außerdem ist zu erkennen, dass das Bauteil 1 in sich gekrümmt ist.

Figur 14 zeigt den prinzipiellen Verlauf der Druckeigenspannung σ_{E} in einem Bauteil 1, wie er sich durch einen Bestrahlungsvorgang ergibt
In dem Diagramm ist die Druckeigenspannung σ_{E} über der Tiefe d eines Bauteils 1 aufzutragen. Das Maximum 67 der Druckeigenspannung σ_{E} liegt nicht an der Oberfläche 4 des Bauteils 1, d.h. bei d = 0, sondern im Inneren des Bauteils 1 (d > 0). Den Verlauf der Druckeigenspannung σ_{E} zeigt die gestrichelt gezeichnete Kurve 61.

Gewünscht ist jedoch, dass ein maximaler Wert der Druckeigenspannung σ_{E} an der Oberfläche 5 des Bauteils 1 vorhanden ist. Diesen gewünschten Verlauf der Druckeigenspannung σ_{E} zeigt die durchgezogene Linie der Kurve 64.

Der gewünschte Verlauf 64 kann beispielsweise wie folgt erreicht werden.

In einem ersten Arbeitsgang wird ein konkav gekrümmter Bereich 7, 10 mit hohem Strahldruck bestrahlt. In einem zweiten Arbeitsgang wird derselbe Bereich 7, 10 mit geringerer Intensität bestrahlt, so dass sich das Maximum an die Oberfläche 5 des Bauteils 1 verschiebt. Dies erfolgt jedoch wie oben beschrieben in einem Arbeitsgang erfolgt.

So wird erreicht, dass das Maximum der Druckeigenspannung σ_{E} an der Oberfläche 5 oder nahe der Oberfläche 5 vorhanden ist und trotzdem eine hohe Eindringtiefe der Druckeigenspannung σ_{E} in den Bauteil 1 vorhanden ist.

Figur 15 zeigt ein Bauteil 13, das mittels des erfindungsgemäßen Verfahrens behandelt werden kann.
Figur 15 zeigt in perspektivischer Ansicht eine Turbinenschaufel 13 beispielsweise für eine Dampfturbine, die sich entlang einer Längsachse 37 erstreckt.
Bei herkömmlichen Turbinenschaufeln 13 werden in allen Bereichen 40, 19, 43 der Laufschaufel 1 massive metallische Werkstoffe verwendet.
Die Turbinenschaufel 13 kann hierbei durch ein Gussverfahren, durch ein Schmiedeverfahren, durch ein Fräsverfahren oder Kombinationen daraus gefertigt sein.
Die Turbinenschaufel 13 weist entlang der Längsachse aufeinander folgend einen Befestigungsbereich 16, eine daran angrenzende Schaufelplattform 19 sowie einen Schaufelblattbereich 40 auf. Im Befestigungsbereich 16 ist ein Schaufelfuß 43 gebildet, der zur Befestigung der Turbinenschaufel 13 an der Scheibe 22 einer nicht dargestellten Strömungsmaschine dient. Der Schaufelfuß 43 ist als Hammerkopf ausgestaltet.
Andere Ausgestaltungen, beispielsweise als Tannenbaum- (Fig. 2) oder Schwalbenschwanzfuß sind möglich.
Der Tannenbaumfuß 43 weist sowohl zumindest in einem konkav gekrümmten Bereich 7 und dem sich anschließenden konvex gekrümmten Bereich 10 von null verschiedene Druckeigenspannungen auf, so dass Druckeigenspannungen großflächig auf der Oberfläche des Schaufelfußes, insbesondere überall, vorhanden sind.

Die Figur 16 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.

Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt.
Ebenso können die Substrate eine gerichtete Struktur aufweisen, d.h. sie einkristallin (SX-Struktur) oder weisen nur längsgerichtete Körner auf (DS-Struktur).
Als Material werden Eisen-, Nickel- oder Kobaltbasierte Superlegierungen verwendet.
Ebenso können die Schaufeln 120, 130 Beschichtungen gegen Korrosion (MCrAlX; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen. Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegendem Leitschaufelkopf auf. Der Leitschaufelkopf ist dem Rotor 103 zugewandt und an einem Befestigungsring 140 des Stators 143 festgelegt.

In Figur 17 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließende Außengehäuse 315 auf.
Die Hochdruck-Teilturbine 300 ist beispielsweise in Topfbauart ausgeführt. Die Mitteldruck-Teilturbine 303 ist zweiflutig ausgeführt.
Es ist ebenfalls möglich, dass die Mitteldruck-Teilturbine 303 einflutig ausgeführt ist.
Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinen welle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist beispielsweise aus zwei Teilturbinenwellen 309a und 309b zusammengesetzt, die im Bereich des Lagers 318 fest miteinander verbunden sind.

## Patentansprüche

1. Turbinenschaufel (120, 130, 342, 354), die in einem Befestigungsbereich (16) oder Schaufelfuß (43) einen gekrümmten Oberflächenbereich (4) in Form eines Tannenbaums aufweist,
wobei der Oberflächenbereich (4) aus zumindest einem konkav gekrümmten Bereich (7, 11) und zumindest einem konvex gekrümmten Bereich (10, 12) besteht, die aneinander angrenzen,
**dadurch gekennzeichnet,**
**dass** der konkav gekrümmte Bereich (7, 11) durch Kugelbestrahlung von Null verschiedene Druckeigenspannungen (σ_{E}) aufweist,
**dass** der konvex gekrümmte Bereich (10, 12) durch Kugelbestrahlung von Null verschiedene Druckeigenspannungen (σ_{E}) aufweist,
**dass** der konkav gekrümmte Bereich (7, 11) höhere Druckeigenspannungen (σ_{E}) aufweist als der konvex gekrümmte Bereich (10, 12),
**dass** der konkav gekrümmte Bereich (7, 11) im Minimum (7') einen Krümmungsradius (R) aufweist und
**dass** der konkav gekrümmte Bereich (7, 11) zumindest eine Breite (81) des drei bis fünffachen des Krümmungsradius (R) aufweist, und
**dass** der gesamte Oberflächenbereich (4) Druckeigenspannungen (σ_{E}) aufweist.

2. Bauteil nach Anspruch 1,
**dadurch gekennzeichnet, dass**
die Höhe der Druckeigenspannung (σ_{E}) in dem konkav gekrümmten Bereich (7, 11) mindestens 30%,
insbesondere 50% der Streckgrenze (Rₚ),
insbesondere der Streckgrenze (R_{p 0,2}),
des Materials des Bauteils (1, 13, 120, 130, 342, 354) beträgt.

3. Bauteil nach Anspruch 2,
**dadurch gekennzeichnet, dass**
die Druckeigenspannung (σ_{E}) mindestens 60% der Streckgrenze (Rₚ),
insbesondere der Streckgrenze (R_{p 0,2}),
des Materials des Bauteils (1, 13, 120, 130, 342, 354) beträgt.

4. Bauteil nach Anspruch 1 oder 2,
**dadurch gekennzeichnet, dass**
die Druckeigenspannung (σ_{E}) im konkav gekrümmten Bereich (7, 11) um mindestens 50%, insbesondere um 75% höher als im konvex gekrümmten Bereich (10, 12) mit den niedrigeren Druckeigenspannung (σ_{E}) ist.

5. Bauteil nach Anspruch 1 bis 4,
**dadurch gekennzeichnet,**
**dass** zumindest ein Bereich (7, 10) eine laterale Verteilung der Höhe der Druckeigenspannungen (σ_{E}) mit zumindest einem Maximum (70, 73) und/oder einem Plateau (74) aufweist, und dass das Maximum (70) des konkav gekrümmten Bereichs (7) höher ist als das Maximum (73) oder das Plateau (74) des konvex gekrümmten Bereichs (10).

6. Bauteil nach Anspruch 1 bis 5,
**dadurch gekennzeichnet, dass**
das Bauteil (1) ein Bauteil einer Dampf- (300, 303) oder Gasturbine (100) ist,
insbesondere eine Turbinenschaufel (120, 130, 342, 354).

7. Verfahren zur Herstellung einer Turbinenschaufel (120, 130, 342, 354), die in einem Befestigungsbereich (16) oder Schaufelfuß (43) einen gekrümmten Oberflächenbereich (4) in Form eines Tannenbaums aufweist,
wobei der Oberflächenbereich (4) aus zumindest einem konkav gekrümmten Bereich (7, 11) und zumindest einem konvex gekrümmten Bereich (10, 12) besteht, die aneinander angrenzen,
wobei zumindest zwei Kugelstrahldüsen (25, 25', 25", 25"', 25"") verwendet werden, und
wobei zumindest zwei Kugelstrahldüsen (25, 25', 25", 25"', 25"") gleichzeitig betrieben werden, um in dem Bauteil (1, 13, 120, 130, 342, 354) DruckeigenSpannungen (σ_{E}) zu erzeugen,
**dadurch gekennzeichnet,**
**dass** in dem konkav gekrümmten Bereich (7, 11) von Null verschiedene Druckeigenspannungen (σ_{E}) erzeugt werden,
**dass** in dem konvex gekrümmten Bereich (10, 12) von Null verschiedene Druckeigenspannungen (σ_{E}) erzeugt werden,
so dass lokal unterschiedliche und von Null verschiedene Druckeigenspannungen (σ_{E}) erzeugt werden,
**dass** der konkav gekrümmte Bereich (7, 11) höhere Druckeigenspannungen (σ_{E}) aufweist als der konvex gekrümmte Bereich (10, 12),
**dass** für die Kugelstrahldüsen (25, 25', 25", 25"', 25"") verschiedene Strahldrücke und Kugeldurchmesser (55, 58) benutzt werden,
wobei zumindest eine Kugelstrahldüse (25, 25', 25", 25"', 25"") Druckeigenspannungen (σ_{E}) erzeugt und
die anderen Kugelstrahldüsen (25', 25", 25"', 25"") eine Glättung erzielen,
**dass** ein konkav (7, 11) und ein konvex (10, 12) gekrümmter Bereich des Bauteils (1, 120, 130, 342, 354) zusammen durch einmaliges oder mehrmaliges Überfahren der Bereiche (7, 10) mittels der Kugelstrahldüsen (25, 25', ...) bestrahlt wird, und dass der gesamte Oberflächenbereich (4) Druckeigenspannungen aufweist.

8. Verfahren nach Anspruch 7,
**dadurch gekennzeichnet, dass**
als Parameter für die Kugelstrahldüse (25, 25', 25",
25"', 25"")
der Strahldruck,
die Größe (55, 58) des Strahlmittels (28),
das Material des Strahlmittels (28),
der Auftreffwinkel (α) oder
die Strahlform ausgewählt werden.

9. Verfahren nach Anspruch 7,
**dadurch gekennzeichnet,**
**dass** zumindest eine Kugelstrahldüse (25, 25", 25"', 25"") einen hohen Strahldruck erzeugt, und
**dass** zumindest eine zweite oder weitere Kugelstrahldüsen (25', 25", 25"', 25"") einen geringeren Strahldruck als die zumindest eine Kugelstrahldüse (25) erzeugen.

10. Verfahren nach Anspruch 7 bis 9,
**dadurch gekennzeichnet, dass**
die Druckerzeuger (25 bis 25"") oder das Bauteil (1, 120, 130, 342, 354) bei der Kugelbestrahlung kontrolliert geführt werden.

11. Verfahren nach Anspruch 10,
**dadurch gekennzeichnet, dass**
die kontrollierte Führung durch einen Laser (31, 34) erfolgt.

12. Verfahren nach 7 oder 11,
**dadurch gekennzeichnet, dass**
durch die Kugelbestrahlung mit geringerem Strahldruck und/oder Kugeln (28) größeren Durchmesser (58) die Bereiche (46),
die zuvor mit hohem Strahldruck bestrahlt wurden, geglättet werden.

13. Verfahren nach Anspruch 7,
**dadurch gekennzeichnet, dass**
ein Kugelstrahl (29) einer Kugelstrahldüse (25, 25', 25", 25"', 25"") Kugeln (28) verschiedener Durchmesser (55, 58) enthält.

14. Verfahren nach Anspruch 7,
**dadurch gekennzeichnet, dass**
Kugelstrahlen (29) der Kugelstrahldüsen (25, 25', 25", 25"', 25"") Kugeln (28) aus verschieden harten Materialien enthält.

15. Verfahren nach Anspruch 1, 13 oder 14,
**dadurch gekennzeichnet, dass**
die Kugeln (28) aus Keramik und/oder Metall bestehen.

16. Verfahren nach Anspruch 8,
**dadurch gekennzeichnet, dass**
ein Auftreffwinkel (α) zwischen der Strahlrichtung zumindest einer Kugelstrahldüse (25, 25', 25", 25"', 25"") und der gekrümmten Oberfläche (4) des Bauteile (1, 120, 130, 342, 354) eingestellt wird,
der (α) kleiner als 90° ist.

17. Verfahren nach Anspruch 10 oder 11,
**dadurch gekennzeichnet, dass**
die Führung und Kontrolle des Bauteils (1, 120, 130, 342, 354) oder der Druckerzeuger (25, 25', 25", 25"', 25"") durch eine CNC-Maschine erfolgt.

## Claims

1. Turbine blade or vane (120, 130, 342, 354)
which in a securing region (16) or blade or vane root (43) has a curved surface region (4), in the shape of a fir tree, the surface region (4) comprising
at least one concavely curved region (7, 11) and
at least one convexly curved region (10, 12),
which adjoin one another,
**characterized in that**
the concavely curved region (7, 11) has different compressive residual stresses (σ_{E}) than zero by shot-peening,
that the convexly curved region (10, 12) has different compressive residual stresses (σ_{E}) than zero by shot-peening, that the concavely curved region (7, 11) has higher compressive residual stresses (σ_{E}) than the convexly curved region (10, 12),that the concavely curved region (7, 11) at the minimum (7') has a radius of curvature (R), and
**in that** the concavely curved region (7, 11) has at least one width (81) of three to five times the radius of curvature (R), and
the entire surface region (4) has compressive residual stresses (σ_{E}).

2. Component according to Claim 1,
**characterized in that**
the level of the compressive residual stress (σ_{E}) in the concavely curved region (7, 11) amounts to at least 30%,
in particular 50% of the yield strength (Rₚ),
in particular of the yield strength (R_{p 0.2}),
of the material of the component (1, 13, 120, 130, 342, 354).

3. Component according to Claim 2,
**characterized in that**
the compressive residual stress (σ_{E}) amounts to at least 60% of the yield strength (Rp),
in particular of the yield strength (R_{p 0.2}),
of the material of the component (1, 13, 120, 130, 342, 354).

4. Component according to Claim 1 or 2,
**characterized in that**
the compressive residual stress (σ_{E}) in the concavely curved region (7, 11) is at least 50%,
in particular 75% higher than in the convexly curved region (10, 12) having the lower compressive residual stress (σ_{E}).

5. Component according to Claims 1 to 4,
**characterized in that**
at least one region (7, 10) has a lateral distribution of the level of the compressive residual stresses (σ_{E}) with at least one maximum (70, 73) and/or a plateau (74), and
**in that** the maximum (70) of the concavely curved region (7) is higher than the maximum (73) or the plateau (74) of the convexly curved region (10).

6. Component according to Claims 1 to 5,
**characterized in that**
the component (1) is a component of a steam turbine (300, 303) or gas turbine (100),
in particular a turbine blade or vane (120, 130, 342, 354).

7. Process for producing a turbine blade or vane (120, 130, 342, 354),
which in a securing region (16) or blade or vane root (43) has a curved surface region (4) in the shape of fir tree,
the surface region (4) comprising at least one concavely curved region (7, 11) and at least one convexly curved region (10, 12) which adjoin one another,
at least two shot-peening nozzles (25, 25', 25", 25"', 25"") being used, and
at least two shot-peening nozzles (25, 25', 25", 25"', 25"") being operated simultaneously, in order to generate compressive residual stresses (σ_{E}) in the component (1, 13, 120, 130, 342, 354),
**characterized in that**
in the concavely curved region (7, 11) different compressive residual stresses (σ_{E}) than zero are generated,
in the convexly curved region (10, 12) different compressive residual stresses (σ_{E}) than zero are generated,
so that locally different compressive residual stresses (σ_{E}) that are different than zero are generated,
that the concavely curved region (7, 11) has higher compressive residual stresses (σ_{E}) than the convexly curved region (10, 12), that different peening pressures and shot diameters (55, 58), are used for the shot-peening nozzles (25, 25', 25", 25"', 25""),
at least one shot-peening nozzle (25, 25', 25", 25"', 25"") generating compressive residual stresses (σ_{E}), and
the other shot-peening nozzles (25', 25", 25"', 25"") achieving a smoothing action,
that a concavely curved region (7, 11) and a convexly curved region (10, 12) of the component (1, 120, 130, 342, 354) are together peened by the regions (7, 10) being passed over one or more times by means of the shot-peening nozzles (25, 25', ...), and
that the entire surface region (4) has compressive residual stresses.

8. Process according to Claim 7,
**characterized in that**
the peening pressure,
the size (55, 58) of the peening abrasive (28),
the material of the peening abrasive (28),
the angle of incidence (α) or
the blasting shape
are selected as parameters for the shot-peening nozzle (25, 25', 25", 25"', 25"").

9. Process according to Claim 7,
**characterized**
**in that** at least one shot-peening nozzle (25, 25", 25"', 25"") generates a high peening pressure, and
**in that** at least one second or further shot-peening nozzles (25', 25", 25"', 25"") generate a lower peening pressure than the at least one shot-peening nozzle (25).

10. Process according to Claims 7 to 9,
**characterized in that**
the pressure generators (25 to 25"") or the component (1, 120, 130, 342, 354) are guided in a controlled way during the shot-peening.

11. Process according to Claim 10,
**characterized in that**
the controlled guidance is effected by a laser (31, 34).

12. Process according to Claim 7 or 11,
**characterized in that**
the regions (46)
which had previously been peened with a high peening pressure are smoothed by the shot-peening with a lower peening pressure and/or using shot (28) of a larger diameter (58).

13. Process according to Claim 7,
**characterized in that**
a shot jet (29) from a shot-peening nozzle (25, 25', 25", 25"', 25"") contains shot (28) of different diameters (55, 58) .

14. Process according to Claim 7,
**characterized in that**
shot jets (29) from the shot-peening nozzles (25, 25', 25", 25"', 25"") contain shot (28) made from materials of different hardnesses.

15. Process according to Claim 1, 13 or 14,
**characterized in that** ,
the shot (28) consists of ceramic and/or metal.

16. Process according to Claim 8,
**characterized in that**
an angle of incidence (α) between the peening direction of at least one shot-peening nozzle (25, 25', 25", 25"', 25"") and the curved surface (4) of the component (1, 120, 130, 342, 354)
which (α) is less than 90°,
is set.

17. Process according to Claim 10 or 11,
**characterized in that**
the guiding and control of the component (1, 120, 130, 342, 354) or of the pressure generators (25, 25', 25", 25"', 25"") is effected by a CNC machine.

## Revendications

1. Aube (120, 130, 342, 354) de turbine,
qui a dans une partie (16) de fixation ou une emplanture (43) d'aube, une partie (4) de surface courbée sous la forme d'un sapin,
dans laquelle la partie (4) de surface
est constituée d'au moins une partie (7, 11) concave et d'au moins une partie (10, 12) convexe qui sont voisines,
**caractérisée**
**en ce que** la partie (7, 11) concave a, par exposition à des billes, des contraintes propres de compression (σ_{E}) différentes de zéro,
**en ce que** la partie (10, 12) convexe a, par exposition à des billes, des contraintes propres de compression (σ_{E}) différentes de zéro,
**en ce que** la partie (7, 11) concave a des contraintes propres de compression (σ_{E}) plus grandes que celles de la partie (10, 12) convexe,
**en ce que** la partie (7, 11) concave a au minimum (7') un rayon (R) de courbure, et
**en ce que** la partie (7, 11) concave a au moins une largeur (81) du triple au quintuple du rayon (R) de courbure, et
**en ce que** toute la partie (4) de surface a des contraintes propres de compression (σ_{E}).

2. Élément constitutif suivant la revendication 1,
**caractérisé en ce que**
la valeur de la contrainte (σ_{E}) propre de compression dans la partie (7, 11) concave représente au moins 30 %,
notamment 50 % de la limite élastique (Rp),
notamment de la limite élastique (R_{p 0,2}) du matériau de l'élément (1, 13, 120, 130, 342, 354) constitutif.

3. Élément constitutif suivant la revendication 2,
**caractérisé en ce que**
la contrainte (σ_{E}) propre de compression représente au moins 60 % de la limite élastique (Rₚ),
notamment de la limite élastique (R_{p 0,2}) du matériau de l'élément (1, 13, 120, 130, 342, 354) constitutif.

4. Élément constitutif suivant la revendication 1 ou 2,
**caractérisé en ce que**
la contrainte (σ_{E}) propre de compression dans la partie (7, 11) concave est plus grande d'au moins 50 %, notamment d'au moins 75 % que dans la partie (10, 12) convexe ayant la contrainte propre de compression (σ_{E}) la plus petite.

5. Élément constitutif suivant la revendication 1 à 4,
**caractérisé**
**en ce qu'**au moins une partie (7, 10) a une répartition latérale de la valeur des contraintes propres de compression (σ_{E}) ayant au moins un maximum (70, 73) et/ou un plateau (74), et
**en ce que** le maximum (70) de la partie (7) concave est plus grand que le maximum (73) ou le plateau (74) de la partie (10) convexe.

6. Élément constitutif suivant la revendication 1 à 5,
**caractérisé**
**en ce que** l'élément (1) constitutif est un élément constitutif d'une turbine à vapeur (300, 303) ou d'une turbine à gaz (100),
notamment une aube (120, 130, 342, 354) de turbine.

7. Procédé de fabrication d'une aube (120, 130, 342, 354) de turbine,
qui a, dans une partie (16) de fixation ou une emplanture (43) d'aube, une partie (4) de surface courbée sous la forme d'un sapin,
dans laquelle la partie (4) de surface
est constituée d'au moins une partie (7, 11) concave et d'au moins une partie (10, 12) convexe qui sont voisines,
dans lequel on utilise au moins deux buses (25, 25', 25", 25"', 25"") à jet de billes, et
dans lequel on fait fonctionner en même temps au moins deux buses (25, 25', 25", 25"', 25"") à jet de billes pour produire des contraintes propres de compression (σ_{E}) dans l'élément (1, 13, 120, 130, 342, 354) constitutif,
**caractérisé**
**en ce que** l'on produit des contraintes propres de compression (σ_{E}) différentes de zéro dans la partie (7, 11) concave,
**en ce que** l'on produit des contraintes propres de compression (σ_{E}) différentes de zéro dans la partie (10, 12) convexe,
de manière à produire des contraintes propres de compression (σ_{E}) différentes localement et différentes de zéro,
**en ce que** la partie (7, 12) concave a des contraintes propres de compression (σ_{E}) plus grandes que celles de la partie (10, 12) convexe,
**en ce que** l'on utilise pour les buses (25, 25', 25", 25"', 25"") à jet de billes des pressions de jet et des diamètres (55, 58) de bille différents,
au moins une buse (25, 25', 25", 25"', 25"") à jet de billes produisant des contraintes propres de compression (σ_{E}), et
les autres buses (25, 25', 25", 25"', 25"") à jet de billes produisant un lissage,
**en ce que** l'on expose, au moyen des buses (25, 25', ...) à jet de billes, une partie (7, 11) concave et une partie (10, 12) convexe de l'élément (1, 120, 130, 342, 354) constitutif ensemble en passant une ou plusieurs fois sur les parties (7, 10), et
**en ce que** toute la partie (4) de surface a des contraintes propres de compression (σ_{E}).

8. Élément constitutif suivant la revendication 7,
**caractérisé en ce que**
l'on choisit comme paramètre pour les buses (25, 25', 25", 25"', 25"") à jet de billes,
la pression du jet,
la dimension (55, 58) de l'agent (28) du jet,
le matériau de l'agent (28) du jet,
l'angle (α) d'incidence ou
la forme du jet.

9. Élément constitutif suivant la revendication 7,
**caractérisé**
**en ce qu'**au moins une buse (25, 25', 25", 25"', 25"") à jet de billes produit une pression de jet qui est grande, et
**en ce qu'**au moins une deuxième ou d'autres buses (25, 25', 25", 25"', 25"") à jet de billes produisent une pression du jet plus petite que celle produite par la au moins une buse (25) à jet de billes.

10. Procédé suivant la revendication 7 à 9,
**caractérisé en ce que**,
lors de l'exposition à un jet de billes, on guide de façon contrôlée les dispositifs (25 à 25"") de production de pression ou l'élément (1, 120, 130, 342, 354) constitutif.

11. Procédé suivant la revendication 10,
**caractérisé en ce que**
l'on effectue le guidage contrôlé par un laser (31, 34).

12. Procédé suivant la revendication 7 ou 11,
**caractérisé en ce que**
l'on rend lisse par l'exposition à un jet de billes ayant une pression de jet assez petite et/ou par des billes (28) de diamètre (58) assez grand, les parties (46)
qui ont été exposées auparavant à une grande pression de jet.

13. Procédé suivant la revendication 7,
**caractérisé**
**en ce qu'**un jet (29) de billes d'une buse (25, 25', 25", 25"', 25"") à jet de billes comporte des billes (28) de diamètres (55, 58) différents.

14. Procédé suivant la revendication 7,
**caractérisé en ce que**
des jets (29) de billes des buses (25, 25', 25", 25"', 25"") à jet de billes comportent des billes (28) en matériau de dureté différente.

15. Procédé suivant la revendication 1, 13 ou 14,
**caractérisé en ce que**
les billes (28) sont en céramique et/ou en métal.

16. Procédé suivant la revendication 8,
**caractérisé**
**en ce qu'**on règle un angle (α) d'incidence entre la direction du jet d'au moins une buse (25, 25', 25", 25"', 25"") à jet de billes et la surface (4) courbée de l'élément (1, 120, 130, 342, 354) constitutif
à une valeur (α) plus petite que 90°.

17. Procédé suivant la revendication 10 ou 11,
**caractérisé en ce que**
l'on effectue le guidage et le contrôle de l'élément (1, 120, 130, 342, 354) constitutif ou des dispositifs (25, 25', 25", 25"', 25"") de production de pression par une machine CNC.
